# FASCICULE DE BREVET EUROPEEN

(11) **EP 1 148 700 B1**
(45) Date de publication et mention de la délivrance du brevet: **24.09.2003**
(21) Numéro de dépôt: 01401032.6
(22) Date de dépôt: 23.04.2001
(51) Int. Cl.: H04M 9/08, H04M 1/60

(54) **Téléphone mobile sans souffle**
Atemgeräuschfreies Mobiltelefon
Wind-noise-free mobile telephone

(30) Priorité: 21.04.2000 FR 0005212
(43) Date de publication de la demande: 24.10.2001
(73) Titulaire: SAGEM S.A., 75015 Paris (FR)
(72) Inventeur: Almeras, Pierre, c/o Cab. Christian Schmit et Ass, 95000 Cergy (FR); Lothon, Christophe, 78700 Conflans Sante Honorine (FR); De Cordue, Stanislas, c/o Cab. Christian Schmit, 95000 Cergy (FR)
(74) Mandataire: Schmit, Christian Norbert Marie

(56) Documents cités:
- EP-A- 0 604 295
- GB-A- 2 281 157
- US-A- 5 161 170
- US-A- 5 530 767
- US-A- 5 559 880
- US-A- 5 966 438

## Description

La présente invention a pour objet un téléphone mobile sans souffle, c'est-à-dire dont les caractéristiques acoustiques ont été perfectionnées pour en rendre l'utilisation plus agréable. Elle est plus particulièrement destinée au domaine de la téléphonie mobile pour des téléphones mobiles avec écoute amplifiée, notamment lorsque les deux interlocuteurs, de part et d'autre de la ligne de communication, utilisent une fonction d'écoute amplifiée ou de mains libres.

Pour les téléphones mobiles, une telle utilisation est particulièrement recherchée parce que ces appareils sont généralement utilisés à l'extérieur, dans une ambiance qui est loin de connaître le calme d'un bureau de travail. A l'intérieur d'une voiture, ou en plein vent avec les bruits de la circulation, l'amplification normale des sons entendus est en général insuffisante. Les téléphones comportent- alors une touche sur laquelle l'utilisateur peut appuyer pour provoquer une écoute amplifiée. Dans une voiture, des dispositifs dits kit mains libres permettent même d'orienter vers des haut-parleurs installés dans la voiture les sons à diffuser. Ces sons à diffuser émis fortement excitent alors le microphone du téléphone mobile et sont transmis, sous forme d'échos, à l'interlocuteur distant. Si celui-ci utilise également une écoute amplifiée, ou un dispositif d'écoute mains libres, une boucle se forme dite boucle Larsen conduisant à la production d'un bruit auto-oscillant. Dans le domaine de la téléphonie mobile, compte tenu des différentes durées de relaxation des phénomènes de transmission, on observe un bruit fort, présent dans la bande de 1000 Hz à 2000 Hz. Compte tenu des dispositifs de régulation d'amplitude disponibles dans la chaîne de transmission, cet effet Larsen ne retentit pas en une saturation des amplifications et des haut-parleurs, mais se manifeste la plupart du temps sous la forme d'un souffle gênant.

Dans l'état de la technique divers dispositifs ont été prévus pour réduire ce souffle ou cet effet Larsen. On connaît ainsi des dispositifs de type électromécanique consistant à modifier le mode d'excitation de la bobine d'un haut-parleur utilisé en écoute amplifiée. Ces solutions à caractère technologique présentent cependant l'inconvénient d'être coûteuses, et de ne pouvoir être mises en oeuvre que sur des nouveaux téléphones mobiles qu'il est possible d'équiper avec de tels haut-parleurs perfectionnés. Pour le parc de téléphones mobiles existants, les modifications technologiques impliquées seraient trop coûteuses.

On connaît par ailleurs des dispositifs anti-Larsen qui consistent notamment à diminuer le gain de l'amplificateur qui attaque le haut-parleur, et ou du détecteur du microphone, en fonction de la puissance de bruit mesurée sur le microphone. Une telle solution qui présente l'avantage de pouvoir être mise en oeuvre par un changement de logiciel de traitement dans une mémoire programme du téléphone mobile présente cependant l'inconvénient de conduire à une baisse notable de sensibilité, et en définitive de ne pas permettre à l'utilisateur de pousser le son de son téléphone mobile aussi fort qu'il le voudrait. En particulier, un tel dispositif est décrit dans la demande de brevet US - 5 966 438. Il s'agit d'un système audio pour téléphone mobile permettant de contrôler l'amplitude du son produit par les haut-parleurs du téléphone en fonction de l'amplitude du son reçu dans le microphone du téléphone de sorte que l'amplitude du son produit par les haut-parleurs augmente ou diminue lorsque l'amplitude du son reçu par le microphone augmente ou diminue. Dans ce dispositif, l'amplitude du son produit dans le haut-parleur dépend de l'amplitude du son reçu dans le microphone. Le gain de l'amplificateur est commandé en prenant en compte l'ensemble du signal reçu sur le microphone. Le gain de l'amplificateur est donc déterminé en fonction du volume estimé du discours du locuteur distant mais aussi du niveau de bruit estimé en sortie du microphone.

L'invention a pour objet de remédier à ces inconvénients en proposant une solution nécessitant également un changement du logiciel de traitement, mais très différente de la précédente solution. Dans l'invention, on considère que les effets de type Larsen sont dus en quelque sorte à une traînée du signal sonore et qu'ils sont différents selon que l'amplitude de l'onde acoustique, la puissance, diffusée sur le haut-parleur est croissante ou décroissante.

Dans l'invention on a remarqué en effet que la puissance produite par l'amplificateur pouvait être assignée à une valeur voulue si la puissance de l'onde acoustique était croissante, en définitive si le locuteur distant parlait progressivement de plus en plus fort. Par contre, cette puissance ne devait pas être atténuée aussi fortement lorsque la puissance sonore à diffuser baissait. On a pu alors montrer par des expériences que les effets de souffle étaient complètement supprimés. Ce résultat est obtenu avec en définitive une modification très faible du logiciel de traitement et sans impliquer par ailleurs d'altération de la puissance désirée par l'utilisateur, ou de baisse de la sensibilité de son microphone. Dans l'invention les équipements d'amplification fonctionnent donc toujours d'une manière nominale, conformément aux souhaits de leur utilisateur, mais les effets Larsen ou de souffle sont supprimés.

En résumé, le souffle apparaît lorsque l'énergie du signal utile diminue. Pour contrer ce problème, on diminue le gain. Ceci est fait de façon plus lente que la diminution du signal utile, par moyennage de la mesure d'énergie lorsque celle-ci diminue. Par contre, lorsque le locuteur se remet à parler, c'est-à-dire que l'énergie du signal utile croît, le gain passe à sa valeur maximale de façon quasi instantanée. Dans ce cas, l'énergie prise en compte lors du calcul du gain est l'énergie instantanée mesurée.

En pratique pour percevoir le caractère croissant ou décroissant des sons diffusés, on se préoccupe essentiellement de l'intonation. On effectue alors des comparaisons entre des signaux électriques représentatifs de sons disponibles à une date donnée et des signaux disponibles à une date ultérieure représentatifs de sons ultérieurs. La durée entre la date donnée et la date ultérieure est une durée relativement courte de l'ordre de 20 à 200 millisecondes par rapport aux variations d'intonation du locuteur. De cette façon en fait, c'est essentiellement l'intonation du locuteur qui est traitée et non pas globalement la puissance sonore assignée. Autrement dit, pour un locuteur qui parle plus fort, avec le téléphone mobile de l'invention, on entend plus fort.

L'invention a donc pour objet un téléphone mobile comprenant un haut-parleur, un amplificateur à gain variable et un circuit de commande pour modifier le gain de l'amplificateur, l'amplificateur recevant un signal électrique de réseau et délivrant un signal de réseau amplifié au haut-parleur, caractérisé en ce que le circuit de commande **comporte :**
- un circuit pour appliquer une commande de gain différente à l'amplificateur selon que l'amplitude du signal de réseau à amplifier augmente ou diminue dans le temps, cette amplitude du signal de réseau à amplifier étant mesurée sur la base des différences d'intonation du locuteur à deux dates,
- un circuit pour modifier le gain de l'amplificateur à une date donnée (i+1) en fonction uniquement d'une valeur de l'amplitude du signal de réseau à une date (i) antérieure à cette date donnée, et
- un circuit pour attendre une durée donnée entre la date donnée et la date antérieure, cette durée donnée étant courte relativement aux intonations de la voix d'un locuteur.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1: la représentation schématique d'un téléphone mobile conforme à l'invention ;
- Figure 2 : un diagramme représentatif de la puissance appliquée à un haut-parleur dans l'invention, en fonction de l'évolution de la puissance reçue ;
- Figure 3 : une représentation schématique d'un signal temporel de puissance reçu, et la puissance prise en compte pour le calcul du gain.

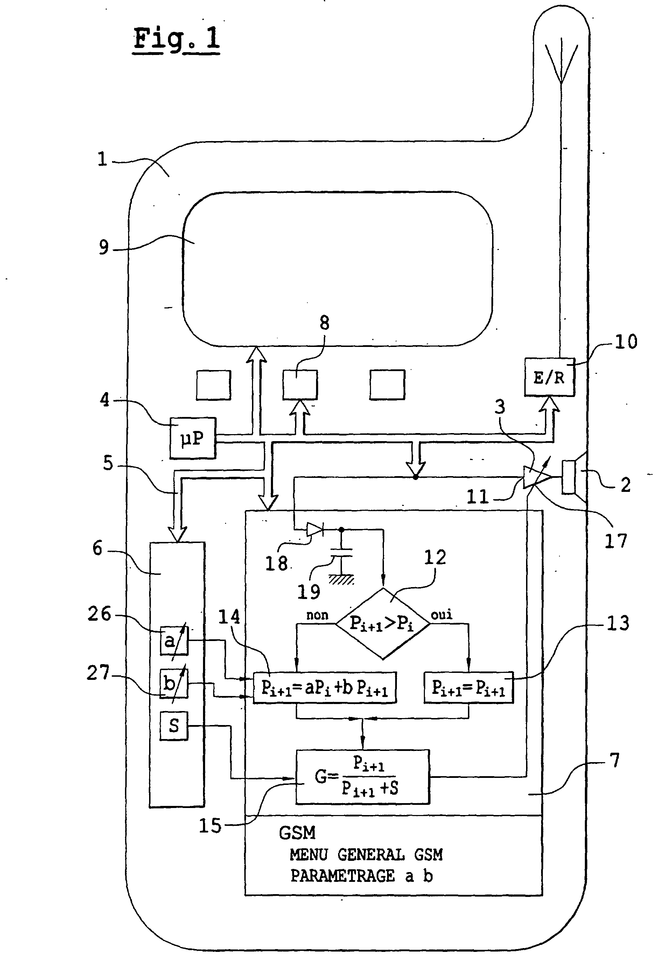

La figure 1 montre un téléphone mobile 1 selon l'invention. Le téléphone mobile 1 comprend un haut-parleur 2, un amplificateur à gain variable 3 connecté en entrée du haut-parleur 2, et un circuit de commande pour modifier le gain de l'amplificateur. Ici le circuit de commande est un circuit de commande comportant un microprocesseur 4 relié par un bus 5 de commandes, de données et d'adresses à une mémoire de données 6, une mémoire programme 7 ainsi qu'à divers périphériques, notamment un clavier 8, un écran 9 et des circuits d'émission réception 10. Dans la mémoire programme 7 on a fait figurer essentiellement, sous une forme hybride, le traitement selon l'invention appliqué aux signaux pour conduire à l'amélioration projetée. Dans un téléphone mobile tous les signaux traités sont numériques. Une conversion analogique numérique n'intervient que in fine. Pour cette raison, tous les traitements font de préférence recours à un microprocesseur 4.

Dans sa relation avec un téléphone d'un autre interlocuteur, le téléphone mobile reçoit par l'intermédiaire des circuits d'émission réception 10 des signaux radioélectriques. Il traite ces signaux pour produire un signal électrique, dit ici de réseau, destiné à être appliqué sur une entrée 11 de l'amplificateur 3. L'amplificateur 3 reçoit donc un signal électrique de réseau et délivre un signal amplifié au haut-parleur 2.

L'amplificateur 3 à gain variable est commandé par un circuit de commande dont la caractéristique essentielle selon l'invention est d'appliquer un signal de commande différent à l'amplificateur 3 selon qu'une amplitude du signal de réseau amplifié augmente ou diminue dans le temps. Dans ce but, la mémoire programme 7 comportera des instructions représentatives d'un test 12 à faire exécuter par le microprocesseur 4 pour comparer la puissance Pi+1, à une date donnée i+1, à une puissance Pi à une date antérieure i à cette date donnée i+1. La puissance Pi à la date antérieure, est de préférence une puissance moyennée sur une période située à la date i. Le test 12 a pour objet de montrer que le signal Pi à amplifier augmente ou diminue dans le temps. Selon le résultat du test, le gain G aura effectivement une valeur (Pi+1)/(Pi+1 + S). Ou bien le gain G aura une valeur (a.Pi+b.Pi+1)/(a.Pi+b.Pi+1+S). Des instructions de calcul respectivement 13 ou 14 permettent de calculer une valeur courante de Pi+1. Une instruction 15 permet de calculer le gain G en fonction des résultats de ces instructions 13 ou 14 sous la forme d'une fraction rationnelle. D'une manière très schématique, le test 12 conduit à l'utilisation des résultats des traitements 13 ou 14. En pratique le traitement est fait selon un logiciel correspondant contenu dans la mémoire programme 7, le microprocesseur 4 ne calculant que le résultat du traitement 13, ou du traitement 14, en fonction du résultat du test 12. Le résultat élaboré par la mise en oeuvre des instructions 13 ou 14 conduit à l'élaboration d'un signal appliqué sur une entrée de commande 17 de l'amplificateur 3 à gain variable.

Du fait que le signal traité Pi et Pi+1 représente l'amplitude de l'onde acoustique à diffuser, et non pas son amplitude instantanée, le test 12 prendra en considération un signal d'amplitude moyenne, ou de puissance, détecté, par exemple par l'intermédiaire d'une diode 18 en série, et d'un condensateur 19 de filtrage en parallèle.

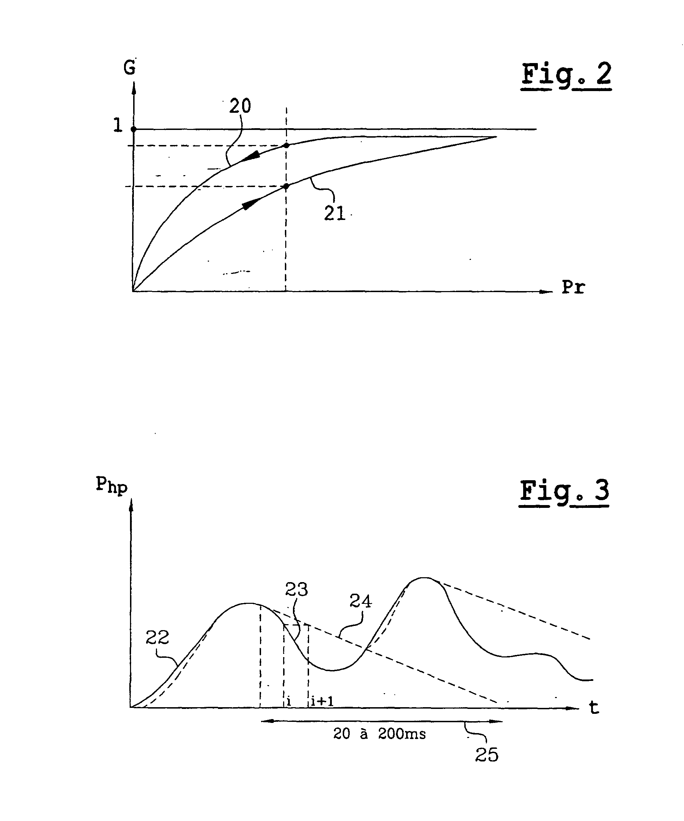

Selon l'invention, une caractéristique essentielle de l'invention est donc que le circuit de commande comporte un circuit pour modifier le gain de l'amplificateur à une date donnée i+1, en fonction d'une valeur du signal de réseau à une date antérieure i à cette date donnée. En effet, à la date i+1, et dans le cas où la puissance (amplitude de l'onde) est décroissante, on utilise l'instruction 14. On prend donc en considération la puissance Pi à la date antérieure i. Cette manière de faire conduit à la création d'un hystérésis montré plus précisément sur la figure 2. Sur celle-ci en abscisse est présentée la puissance reçue Pr, en ordonnée est présenté le gain appliqué sur l'amplificateur 3. Dans l'invention, le graphe 22 représente la puissance mesurée. On constate que lorsque la puissance décroît, la puissance appliquée sur le haut-parleur est plus forte que quand elle croît, pour une même puissance reçue. En effet, dans le cas de décroissance la valeur de la puissance suit la partie supérieure 20 de la courbe avec hystérésis représentée sur la figure 2. Par contre lorsque la puissance reçue augmente, partie basse du graphe de puissance, de la figure 2, la puissance reçue est sensiblement égale, quoiqu'un peu inférieure, à la puissance appliquée sur le haut-parleur : trace 21 du graphe de puissance.

La figure 3 reprend ces éléments en montrant d'une manière synthétique l'évolution dans le temps de la puissance Php normalement appliquée sur le haut-parleur 3. Le graphe 22 en trait continu représente l'évolution du signal de réseau appliqué au haut-parleur selon l'état de la technique. Le gain reste toujours inférieur ou égal à 1 quelle que soit la puissance mesurée. Il monte aussi vite que l'énergie du signal utile, et baisse plus doucement qu'elle. La puissance sur le haut-parleur n'est en aucun cas supérieur à la puissance reçue. Cette évolution conduit aux effets Larsen et au souffle important constaté et que par ailleurs on cherche à éviter. Dans l'invention, courbe en tirets, on montre essentiellement que pour les décroissances 23 de la puissance théoriquement applicables sur le haut-parleur, on applique une puissance 24 supérieure. Dans ce cas, le graphe 24 représente la puissance moyenne utilisée pour le calcul du gain. La figure 3 montre également l'effet de traînée représenté par la constante de temps 25 du phénomène d'hystérésis impliqué par l'invention. Dans la pratique cette constante de temps est courte. Elle peut être de l'ordre de 20 millisecondes à 200 millisecondes. Elle est courte par rapport aux variations d'intonation du locuteur distant.

On choisira plus facilement 20 millisecondes parce que, du fait de la normalisation, les blocs de données de parole numérisée transmis en mode GSM sont cadencés avec des périodes de 20 millisecondes. Donc il est assez engageant de traiter un bloc à une date i+1 et de le comparer pour le test 12, et ou les instructions 13 et 14, au bloc immédiatement précédent reçu à la date i. Cependant on pourrait choisir d'effectuer la comparaison en prenant une durée d'attente entre les blocs à comparer qui soit supérieure et de préférence un multiple de cette durée de 20 millisecondes.

Les coefficients a et b de l'instruction 14 sont par ailleurs réglables. De préférence, les coefficients a et b ne sont pas accessibles par l'utilisateur. Ils sont de préférence accessibles lors de la mise au point, puis figés. En variante, leur mode de réglage sera particulièrement simple : leurs valeurs seront mémorisées dans des zones mémoires 26 et 27 de la mémoire de données 6. De cette façon il pourra être possible avec le microprocesseur 4 et en fonction d'ordres appliqués, notamment par l'intermédiaire du clavier 8, de pouvoir modifier les valeurs a et b. A cet effet le programme de la mémoire programme 7 comportera dans un menu général d'exploitation, dit ici GSM, à côté de sous-programmes d'utilisation de type connu, un sous-programme de paramétrage des coefficients a et b. Ce sous-programme de paramétrage peut permettre à l'utilisateur de régler ces valeurs a et b selon ses préférences. Toutefois, dans l'invention, l'effet de traînée, l'effet d'hystérésis, sera obtenu en donnant aux coefficients a et b des valeurs telles que a soit de l'ordre de 100 à 5000 fois plus grand que b. Autrement dit, l'effet de traînée, quand la puissance est décroissante est particulièrement sensible.

Bien entendu le téléphone mobile de l'invention comportera de préférence à la fois la caractéristique essentielle que le gain est différent selon que l'amplitude augmente ou diminue dans le temps, et la caractéristique essentielle selon laquelle le gain à une date donnée est fonction de la valeur du signal de réseau à une date antérieure que cette date donnée. Dans les deux cas, le gain sera, d'une manière conventionnelle pondérée par un rapport de type P/(P+S) dans laquelle S représente un seuil et qui représente une technique utilisée précédemment dans l'état de la technique pour réduire les effet Larsen : provoquer l'application d'un gain moins fort lorsque le signal à transmettre est lui-même moins fort.

Le fait d'avoir retenu avec les instructions 13 14 et 15 une fraction rationnelle des puissances Pi et Pi+1 présente par ailleurs l'avantage que le calcul à mettre en oeuvre dans ces instruments est simplifié. De simples opérations avec des décalages de registres permettent d'obtenir le résultat immédiatement. En effet tout le traitement est effectué avant conversion numérique analogique du signal de réseau, cette conversion analogique numérique pouvant se produire à l'entrée 11 de l'amplificateur 3, (auquel cas cet amplificateur 3 est un amplificateur analogique) ou à la sortie de ce dernier (auquel cas cet amplificateur 3 est un amplificateur numérique).

Les signaux Pi et Pi+1 sont mémorisés, pendant une durée donnée d'attente pour le premier. Cette durée donnée d'attente est proportionnelle à 20 ms dans le cas préféré selon ce qui a été décrit ci-dessus.

## Revendications

1. Téléphone mobile (1) comprenant un haut-parleur (2), un amplificateur (3) à gain variable et un circuit de commande (4-7) pour modifier (17) le gain de l'amplificateur, l'amplificateur recevant (11) un signal électrique de réseau et délivrant un signal de réseau amplifié au haut-parleur, **caractérisé en ce que** le circuit de commande comporte :
- un circuit (12) pour appliquer une commande de gain différente à l'amplificateur selon que l'amplitude du signal de réseau à amplifier augmente ou diminue dans le temps, cette amplitude du signal de réseau à amplifier étant mesurée sur la base des différences d'intonation du locuteur à deux dates,
- un circuit (14) pour modifier le gain de l'amplificateur à une date donnée (i+1) en fonction uniquement d'une valeur de l'amplitude du signal de réseau à une date (i) antérieure à cette date donnée, et
- un circuit pour attendre une durée donnée entre la date donnée et la date antérieure, cette durée donnée étant courte relativement aux intonations de la voix d'un locuteur.

2. Téléphone selon la revendication 1, **caractérisé en ce que** la durée donnée vaut environ 20 ms.

3. Téléphone selon l'une des revendications 1 à 2, **caractérisé en ce que** le circuit de commande comporte des moyens de traitement pour produire une commande proportionnelle à une fraction rationnelle d'une valeur du signal de réseau.

4. Téléphone selon la revendication 3, **caractérisé en ce que** les moyens de traitement comportent deux mémoires programmables (26, 27) pour mémoriser deux valeurs (a, b) de coefficients de la fraction rationnelle.

5. Téléphone selon la revendication 4, **caractérisé en ce qu'**une valeur d'un des coefficients est beaucoup plus importante qu'une valeur de l'autre coefficient.

## Patentansprüche

1. Mobiltelefon (1), umfassend einen Lautsprecher (2), einen Verstärker (3) mit variabler Verstärkung und einen Steuerschaltung (4-7), um die Verstärkung des Verstärkers zu verändern (17), wobei der Verstärker ein elektrisches Netzsignal empfängt (11) und ein verstärktes Netzsignal an den Lautsprecher liefert, **dadurch gekennzeichnet, dass** die Steuerschaltung umfasst:
- eine Schaltung (12), um an den Verstärker eine unterschiedliche Verstärkungssteuerung in Abhängigkeit davon anzulegen, ob die Amplitude des zu verstärkenden Netzsignals mit der Zeit größer oder kleiner wird, wobei diese Amplitude des zu verstärkenden Netzsignals auf Basis der Intonationsunterschiede des Sprechers zu zwei Zeitpunkten gemessen wird,
- eine Schaltung (14), um die Verstärkung des Verstärkers zu einem gegebenen Zeitpunkt (i+1) nur in Abhängigkeit von einem Wert der Amplitude des Netzsignals zu einem Zeitpunkt (i) vor diesem gegebenen Zeitpunkt zu verändern, und
- eine Schaltung, um eine gegebene Zeitdauer zwischen dem gegebenen Zeitpunkt und dem vorhergehenden Zeitpunkt abzuwarten, wobei diese gegebene Zeitdauer im Verhältnis zu den Intonationen der Stimme eines Sprechers kurz ist.

2. Telefon nach Anspruch 1, **dadurch gekennzeichnet, dass** die gegebene Zeitdauer ungefähr 20 ms beträgt.

3. Telefon nach einem der Ansprüche 1 bis 2, **dadurch gekennzeichnet, dass** die Steuerschaltung Bearbeitungsmittel umfasst, um eine Steuerung proportional zu einem rationalen Bruchteil eines Wertes des Netzsignals zu erzeugen.

4. Telefon nach Anspruch 3, **dadurch gekennzeichnet, dass** die Bearbeitungsmittel zwei programmierbare Speicher (26, 27) umfassen, um zwei Werte (a, b) von Koeffizienten der rationalen Fraktion zu speichern.

5. Telefon nach Anspruch 4, **dadurch gekennzeichnet, dass** ein Wert eines der Koeffizienten wesentlich größer als ein Wert des anderen Koeffizienten ist.

## Claims

1. A mobile telephone (1) comprising a speaker (2), a variable gain amplifier (3) and a control circuit (4-7) for modifying (17) the amplifier gain, the amplifier receiving (11) an electric network signal and providing an amplified network signal to the speaker, **characterized in that** the control circuit comprises:
- a circuit (12) for applying a different gain control to the amplifier depending on whether the amplitude of the network signal that is to be amplified increases or diminishes in time, this amplitude of the network signal that is to be amplified being measured on the basis of differences in intonation of the person speaking at two times,
- a circuit (14) for modifying the amplifier gain at a given time (i+1) exclusively according to a value of the amplitude of the network signal at a time (i) prior to this given time, and
- a circuit for waiting for a given duration between the given time and the prior time, this given duration being short in relation to the intonation of the voice of the person speaking.

2. The telephone according to claim 1, **characterized in that** the given duration is about 20 ms.

3. The telephone according to one of claims 1 to 2, **characterized in that** the control circuit comprises processing means for producing a control proportional to a rational fraction of the value of the network signal.

4. The telephone according to claim 3, **characterized in that** the processing means comprise two programmable memories (26, 27) for storing two values (a, b) of rational fraction coefficients.

5. The telephone according to claim 4, **characterized in that** the value of one of these coefficients is much more significant than the value of the other coefficient.
